(19) **Europäisches Patentamt / European Patent Office / Office européen des brevets**

(11) **EP 3 144 507 B1**

(12) **EUROPEAN PATENT SPECIFICATION**

(45) Date of publication and mention
of the grant of the patent:
**26.08.2020 Bulletin 2020/35**

(51) Int Cl.:
***F02C 7/232*** (2006.01)   ***F16K 15/14*** (2006.01)
***G01F 1/28*** (2006.01)

(21) Application number: **16189655.0**

(22) Date of filing: **20.09.2016**

(54) **INTEGRATED BYPASS VALVE WITH PRESSURE, POSITION, AND FLOWRATE FEEDBACK CAPABILITIES**

INTEGRIERTES BYPASSVENTIL MIT DRUCK-, POSITIONS- UND DURCHFLUSS-RÜCKMELDUNG

SOUPAPE DE DÉRIVATION INTÉGRÉE À CAPACITÉS DE MESURE DE PRESSION, DE POSITION ET DE DÉBIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2015 US 201514860118**

(43) Date of publication of application:
**22.03.2017 Bulletin 2017/12**

(73) Proprietor: **Hamilton Sundstrand Corporation Charlotte, NC 28217 (US)**

(72) Inventors:
• **RIBAROV, Lubomir A.**
  **West Hartford, CT Connecticut 06107 (US)**
• **CARPENTER, Richard J.**
  **Gales Ferry, CT Connecticut 06335 (US)**
• **ROURKE, Russel P.**
  **East Granby, CT Connecticut 06026 (US)**
• **GIBBONS, Kevin**
  **Torrington, CT Connecticut 06790 (US)**
• **LUKER, Willliam**
  **Glastonbury, CT Connecticut 06033 (US)**
• **RUSSO, Charles J.**
  **Manchester, CT Connecticut 06040 (US)**
• **SCHMIDT, Samuel**
  **Windsor Locks, CT Connecticut 06096 (US)**

(74) Representative: **Dehns**
  **St. Bride's House**
  **10 Salisbury Square**
  **London EC4Y 8JD (GB)**

(56) References cited:
**WO-A1-2005/036039     WO-A1-2012/076960**
**US-A1- 2005 155 602**

**Description**

BACKGROUND OF THE INVENTION

1. Field of the Invention

The present disclosure relates to valves, and more particularly to bypass valves such as used in proximity to filters installed in fuel, oil, hydraulic, refrigeration, or pneumatic systems of aircraft engines.

2. Description of Related Art

Bypass valves are used in aircraft jet fuel and oil systems typically in filtering applications. A separate pressure sensor measuring the fluid flow pressure across the bypass valve is typically used to monitor the state of the bypass valve and, thus, infer the condition of the filter it protects. These pressure sensors require remote housing cores to access the upstream and downstream pressures relative to the filter. Pressure sensors' housing cores can be problematic as they add additional footprint and weight to a design. Another potential operational drawback with pressure sensors is the risk of amplification of pressures pulsations typically inherent in incompressible fluid systems as driven by the pumping architecture providing the fluid source pressure. These pressure sensors are designed to be readily removable for inspection and/or rapid replacement. Thus, the additional filter accessories (i.e., bolts, seals, fixtures, etc.) add complexity to the filter's housing design.

Such pressure detection devices have generally been considered adequate for their intended purposes, however, this is an ongoing need for improved bypass valves. The present disclosure provides a solution for this need.

SUMMARY OF THE INVENTION

A bypass valve according to claim 1 includes a housing for directing fluid flow through the bypass valve. A disc is positioned within the flow path having an inner perimeter and an outer perimeter. The bypass valve further includes at least one strain gauge disposed on the disc. The inner perimeter of the disc is fixed to the bypass valve housing and the outer perimeter of the disc is free to deflect from the bypass valve housing in response to fluid flow through the bypass valve such that a measurement of deflection of the disc induces strain on the strain gauge.

The disc can be configured to deflect as a function of pressure of fluid flow through the bypass valve. An amount of deflection of the outer perimeter of the disc can generate strain on the disc proportional to the pressure of fluid flow through the bypass valve.

The disc can have a first position defined by the free perimeter adjacent the housing configured to seal with the housing in the first position. The disc can have a second position defined by the free perimeter separated from the housing configured to allow fluid flow through the bypass valve. The disc can include an upstream surface configured to allow fluid to pass over the disc and the strain gauge can be coupled to a downstream surface of the disc opposite the upstream surface. The disc can be metal and can be loaded into the housing for creating a metal to metal seal of the valve in the first position.

The bypass valve can further include a harness in communication with strain gauge configured to provide feedback of the deflection of the outer perimeter of said disc to a control system. The bypass valve can include two strain gauges. The inner perimeter of said disc is fixed to the bypass valve housing and the outer perimeter of said disc is free to deflect away from the bypass valve housing.

These and other features of the systems and methods of the subject disclosure will become more readily apparent to those skilled in the art from the following detailed description of the preferred embodiments taken in conjunction with the drawings.

BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:

Fig. 1 is a cross-sectional view of a housing including a bypass valve, showing the valve in a first closed position; and
Fig. 2 is a cross-sectional view of the housing with the bypass valve of Fig. 1, showing the valve in a second open position.

**DETAILED DESCRIPTION OF THE PREFERRED EMBODIMENTS**

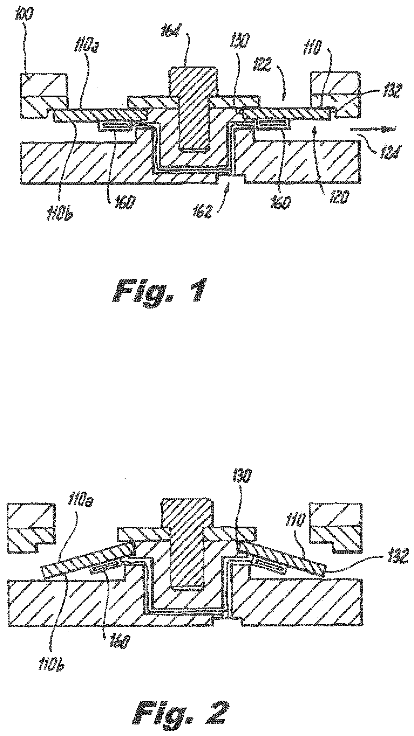

Reference will now be made to the drawings wherein like reference numerals identify similar structural features or aspects of the subject disclosure. For purposes of explanation and illustration, and not limitation, a partial view of an exemplary embodiment of an integrated bypass valve in accordance with the disclosure is shown in Fig. 1 and is designated generally by reference character 100. Other embodiments of the filter in accordance with the disclosure, or aspects thereof, are provided in Fig. 2, as will be described. The system provides feedback of a bypass valve's displacement and fluid flow across the valve in addition to the proposed fluid pressure data. This affords additional monitoring opportunities to detect bypass events that occur when fluid is cold or when the filter is clogged, thus causing increased pressure drop across the filter sufficient enough to actuate the valve. Such events allow unfiltered flow past the filter. Monitoring the occurrence and duration of such fluid flow bypass transients allows improved prognostic life assessments (e.g., Prognostic Health Management) on various downstream components that are sensitive to exposure to debris in the aircraft fuel or oil or hydraulic systems.

With reference to Figs. 1 and 2 a cross-sectional view of an exemplary housing 100 is shown for directing fluid into and out of the housing 100. The housing is positioned downstream of a pump of the aircraft and works in proximity with a filter. A bypass valve 120 is positioned within the housing 100 to regulate the flow of fluid through the housing 100. Those skilled in the art will readily appreciate that similar architectures that optimize the performance of the bypass valve are equally contemplated without departing from the scope of this disclosure.

The bypass valve 120 includes an inlet 122 and an outlet 124 for directing fluid flow through the bypass valve 120. A flat metal disc 110 acts as the bypass valve 120 where the flat disc 110 is restrained along one of its perimeters. More specifically, the disc 110 has an inner 130 and an outer perimeter 132 wherein the inner perimeter 130 is fixed to the housing 100 (i.e. a fixed perimeter) and the outer perimeter 132 is free to deflect (i.e. a free perimeter) as pressure of fluid flow through the bypass valve 120 increases. As shown in Figs. 1 and 2, the inner perimeter 130 is fixed to the housing 100 while the outer perimeter 132 is free to deflect away from the housing 100. At least one strain gauge 160 is disposed on the disc 110. The strain gauge is disposed on a flat downstream surface 110b of the disc 110 for measuring strain, while a flat upstream surface 110a of the disc 110 is configured to allow fluid to pass over the disc 110. The at least one strain gauge 160 is in communication with a harness 162 configured to provide feedback of the deflection of the free perimeter 132 of the disc 110 to a flight deck.

Peak stress across the bypass valve 120 is experienced closest to the housing 100 that restrains the disc's 110 inner perimeter 130 and, therefore, acts as an ideal location for measurement of strain. Strain is proportional to the pressure load across the bypass valve 120 that acts to deflect the disc 110 during a bypass event as shown in Fig. 2. The strain is proportional to the open area created by the disc 110 when deflected. The open area coupled with the pressure measurement from the strain gauge can be used to measure fluid flow past the bypass valve 120.

As shown in Fig. 1, the disc 110 is in a first closed position with the outer perimeter 132 loaded into the housing creating a metal to metal seal blocking the flow of the fluid through the bypass valve 120. This also sets the cracking pressure of the bypass valve 120. As shown in Fig. 2, the disc 110 is in a second open position when the disc 110 deflects in a cantilevered manner about its inner 130 perimeter (i.e. fixed perimeter) that is restrained. With increasing pressure on the disc 110, the disc 110 cracks open allowing flow through to the bypass valve outlet 124. The deflection generates a change in strain on the upstream surface 110a of the bypass valve's disc 110. This strain can be measured by surface mount piezo-resistive elements that would be attached by appropriate means. The resistance of these elements changes as a function of the change in strain of the bypass valve's disc 110. This change in resistance can be measured and used as signal to define the state of deflection of the bypass valve's disc 110. The piezo-resistive elements may be arranged in a Wheatstone bridge or similar bridge circuit, and when supplied with direct current the effective resistance across the bridge circuit provides the signal defining the bypass valve's disc 110 deflection.

Knowing the area, pressure drop, density, and discharge coefficient will allow flow to be calculated past the bypass valve 120. The bypass valve 120 provides the area and pressure inputs. Fluid density can be provided by a separate fluid temperature measurement for improved accuracy. Typically most fuel and oil and hydraulic systems incorporate temperature measurement and this input is readily available through the Electronic Engine Control (EEC)/ Full Authority Digital Engine Control (FADEC). It should be noted that the spring rate of the deflecting disc will be affected by temperature and accuracy of the desired measurement. This may mandate measurement of fluid temperature local to the bypass valve's disc 110. A thin film Resistance Temperature Detector (RTD), or a surface mount Thermally Sensitive Resistor (TSR), can be locally employed to provide correction for changes in the spring rate of the disc. Flow past an orifice can be simply expressed as shown in equation (1):

$$Q = C_d A / \rho \Delta P \qquad\qquad (1)$$

where:

Q - total flow
$C_d$ - discharge coefficient
A - cross-sectional flow area of orifice
$\rho$ - density of fluid
$\Delta P$ - pressure drop of fluid flowing through orifice

In regards to the disclosed bypass valve 120, the discharge coefficient, $C_d$, can be determined experimentally. This discharge coefficient defines the performance of the bypass valve 120 within the housing 100 and can be used as an input to flow measurement. Given the inputs from the bypass valve 120 of fluid pressure and bypass valve cross-sectional open flow area coupled with a system input for fluid density, the measurement of flow is readily determined.

The described bypass valve 120 can be calibrated to enable the intended function. The inner perimeter 130 of the bypass valve disc 110 in contact with the housing 100 is secured with a large threaded feature such as a spanner nut. An additional set screw feature 164 is required to lock the position of the calibrated spanner nut in place. This concept allows for the proper preload adjustment. Any failures of the bypass valve 120 operation can be registered in the integrated aircraft monitoring systems (e.g., the Engine Indicating and Crew Alerting System/Engine Centralized Aircraft Monitor) and become latched upon the activation of the Weight-on-Wheels = 1 (WOW=1) switch as needed. This provides some level of "intelligence" to the proposed bypass valve 120 by automatically alerting ground maintenance crews of any impending/required parts replacements. This in turn, optimizes aircraft ground turn-around times, minimizes the Aircraft On Ground (AOG) times, and improves overall operational efficiency of the aircraft.

The methods and systems of the present disclosure, as described above and shown in the drawings, provide for a bypass valve with superior properties including measurement of strain across the bypass valve. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A bypass valve (120), comprising:

   a housing (100) for directing fluid flow through the bypass valve (120);
   a disc (110) is positioned in the flow path having an inner perimeter (130) and an outer perimeter (132); and
   at least one strain gauge disposed on the disc,
   wherein the inner perimeter of the disc (110) is fixed to the housing (100) and the outer perimeter of the disc (110) is free to deflect from the housing (100) in response to fluid flow through the bypass valve (120) such that a measurement of the deflection of the disc (110) induces strain on the strain gauge; and
   wherein a first threaded screw feature secures the inner perimeter (130) of the disc (110) to a portion of the housing (100), the first threaded screw feature configured to lock-in the position of the disc (110) and wherein a second screw feature (164) is positioned within the first threaded screw feature configured to lock-in the position of the first threaded screw feature in place and wherein the second screw feature (164) is not in contact with the disc.

2. The bypass valve of claim 1, wherein the disc (110) is configured to deflect as a function of pressure of fluid flow through the bypass valve (120).

3. The bypass valve of claims 1 or 2, wherein an amount of deflection of the outer perimeter (132) of the disc (110) generates strain on the disc (110) proportional to the pressure of fluid flow through the bypass valve (120).

4. The bypass valve of any preceding claim, wherein the disc (110) has an upstream surface configured to allow fluid to pass over the disc (110) and the strain gauge is coupled to a downstream surface of the disc (110) opposite the upstream surface.

5. The bypass valve of any preceding claim, wherein the disc (110) has a first position defined by the free perimeter of the disc (110) adjacent the housing (100) configured to seal with the housing (100) in the first position.

6. The bypass valve of claim 5, wherein the disc (110) has a second position defined by the free perimeter of the disc (110) separated from the housing (100) configured to allow fluid flow through the bypass valve (120).

7. The bypass valve of claim 5, wherein the disc (110) is metal and loaded into housing (100) creating a metal to metal seal of the bypass valve (120) in the first position.

8. The bypass valve of any preceding claim, further comprising a harness in communication with strain gauge configured to provide feedback of the deflection of the outer perimeter of the bypass valve's disc (110) to a control system.

9. The bypass valve of any preceding claim, wherein the bypass valve (120) includes two strain gauges.

**Patentansprüche**

1. Bypassventil (120), umfassend:

   ein Gehäuse (100) zum Lenken eines Fluidstroms durch das Bypassventil (120);
   eine Scheibe (110), die im Strömungsweg positioniert ist und einen Innenumfang (130) und einen Außenumfang (132) aufweist; und
   mindestens einen Spannungsmesser, der an der Scheibe angeordnet ist,
   wobei der Innenumfang der Scheibe (110) am Gehäuse (100) fixiert ist und der Außenumfang der Scheibe (110) frei ist, um als Reaktion auf einen Fluidstrom durch das Bypassventil (120) diesen so von dem Gehäuse (100) umzulenken, dass ein Messwert der Umlenkung der Scheibe (110) eine Spannung am Spannungsmesser hervorruft; und
   wobei ein erstes Gewindeschraubenelement den Innenumfang (130) der Scheibe (110) an einem Abschnitt des Gehäuses (100) sichert, wobei das erste Gewindeschraubenelement dazu konfiguriert ist, die Position der Scheibe (110) zu arretieren, und wobei ein zweites Schraubenelement (164) im ersten Gewindeschraubenelement positioniert und dazu konfiguriert ist, die Position des ersten Gewindeschraubenelements zu arretieren und wobei das zweite Schraubenelement (164) nicht mit der Scheibe in Kontakt steht.

2. Bypassventil nach Anspruch 1, wobei die Scheibe (110) dazu konfiguriert ist, als Funktion des Drucks des Fluidstroms durch das Bypassventil (120) umzulenken.

3. Bypassventil nach Anspruch 1 oder 2, wobei ein Betrag der Umlenkung des Außenumfangs (132) der Scheibe (110) eine Spannung an der Scheibe (110) erzeugt, die proportional zum Druck des Fluidstroms durch das Bypassventil (120) ist.

4. Bypassventil nach einem der vorhergehenden Ansprüche, wobei die Scheibe (110) eine stromaufwärtige Fläche aufweist, die so konfiguriert ist, dass sie Fluid über die Scheibe (110) strömen lässt, und der Spannungsmesser an eine stromabwärtige Fläche der Scheibe (110) gekoppelt ist, die der stromaufwärtigen Fläche gegenüberliegt.

5. Bypassventil nach einem der vorhergehenden Ansprüche, wobei die Scheibe (110) eine erste Position aufweist, die dadurch definiert ist, dass der freie Umfang der Scheibe (110) am Gehäuse (100) anliegt, und dazu konfiguriert ist, in der ersten Position das Gehäuse (100) abzudichten.

6. Bypassventil nach Anspruch 5, wobei die Scheibe (110) eine zweite Position aufweist, die dadurch definiert ist, dass der freie Umfang der Scheibe (110) vom Gehäuse (100) getrennt ist, und dazu konfiguriert ist, einen Fluidstrom durch das Bypassventil (120) zu ermöglichen.

7. Bypassventil nach Anspruch 5, wobei die Scheibe (110) aus Metall besteht und in das Gehäuse (100) eingesetzt ist, wodurch in der ersten Position eine Metall-zu-Metall-Abdichtung des Bypassventils (120) geschaffen wird.

8. Bypassventil nach einem der vorhergehenden Ansprüche, ferner umfassend einen Kabelbaum in Kommunikation mit dem Spannungsmesser, der dazu konfiguriert ist, einem Steuersystem eine Rückmeldung der Umlenkung des Außenumfangs der Scheibe (110) des Bypassventils bereitzustellen.

9. Bypassventil nach einem der vorhergehenden Ansprüche, wobei das Bypassventil (120) zwei Spannungsmesser beinhaltet.

## Revendications

**1.** Soupape de dérivation (120), comprenant :

un boîtier (100) pour diriger un écoulement de fluide à travers la soupape de dérivation (120) ;
un disque (110) positionné dans le trajet d'écoulement ayant un périmètre intérieur (130) et un périmètre extérieur (132) ; et
au moins une jauge de contrainte disposée sur le disque,
dans laquelle le périmètre intérieur du disque (110) est fixé au boîtier (100) et le périmètre extérieur du disque (110) est libre de dévier du boîtier (100) en réponse à un écoulement de fluide à travers la soupape de dérivation (120) de sorte qu'une mesure de la déviation du disque (110) induit une contrainte sur la jauge de contrainte ; et
dans laquelle une première caractéristique de vis filetée fixe le périmètre intérieur (130) du disque (110) à une partie du boîtier (100), la première caractéristique de vis filetée étant configurée pour verrouiller la position du disque (110) et dans laquelle une seconde caractéristique de vis (164) est positionnée à l'intérieur de la première caractéristique de vis filetée configurée pour verrouiller la position de la première caractéristique de vis filetée en place et dans laquelle la seconde caractéristique de vis (164) n'est pas en contact avec le disque.

**2.** Soupape de dérivation selon la revendication 1, dans laquelle le disque (110) est configuré pour dévier en fonction de la pression d'un écoulement de fluide à travers la soupape de dérivation (120).

**3.** Soupape de dérivation selon les revendications 1 ou 2, dans laquelle une quantité de déviation du périmètre extérieur (132) du disque (110) génère une contrainte sur le disque (110) proportionnelle à la pression d'écoulement de fluide à travers la soupape de dérivation (120).

**4.** Soupape de dérivation selon une quelconque revendication précédente, dans laquelle le disque (110) a une surface amont configurée pour permettre à du fluide de passer sur le disque (110) et la jauge de contrainte est couplée à une surface aval du disque (110) opposée à la surface amont.

**5.** Soupape de dérivation selon une quelconque revendication précédente, dans laquelle le disque (110) a une première position définie par le périmètre libre du disque (110) adjacent au boîtier (100) configuré pour assurer l'étanchéité avec le boîtier (100) dans la première position.

**6.** Soupape de dérivation selon la revendication 5, dans laquelle le disque (110) a une seconde position définie par le périmètre libre du disque (110) séparé du boîtier (100) configuré pour permettre un écoulement de fluide à travers la soupape de dérivation (120).

**7.** Soupape de dérivation selon la revendication 5, dans laquelle le disque (110) est en métal et chargé dans le boîtier (100) créant un joint métal-métal de la soupape de dérivation (120) dans la première position.

**8.** Soupape de dérivation selon une quelconque revendication précédente, comprenant en outre un faisceau en communication avec une jauge de contrainte configurée pour fournir une mesure de la déviation du périmètre extérieur du disque de la soupape de dérivation (110) à un système de commande.

**9.** Soupape de dérivation selon une quelconque revendication précédente, dans laquelle la soupape de dérivation (120) comporte deux jauges de contrainte.

Fig. 1

Fig. 2